# DEMANDE DE BREVET EUROPEEN

(11) **EP 2 343 174 A1**
(43) Date de publication de la demande: **13.07.2011**
(21) Numéro de dépôt: 10305026.6
(22) Date de dépôt: 11.01.2010
(51) Int. Cl.: B29C 45/00, B29C 45/14, G06K 19/02

(54) **Cartes à puce moulées et procédé de fabrication**

(71) Demandeur: Gemalto SA, 92197 Meudon Cedex (FR)
(72) Inventeur: Froger, Alexis, 92197 Meudon (FR); Renouard, Jeremy, 92197 Meudon (FR); Oddou, Laurent, 92197 Meudon (FR)
(74) Mandataire: Cour, Pierre

(57) **Abrégé**

L'invention concerne une carte à puce comportant, d'une part, un corps de carte moulé, réalisé par moulage par injection, et, d'autre part, une puce à circuit intégré, ainsi qu'un procédé de fabrication d'une telle carte. L'invention se caractérise en ce que corps de carte comprend de l'acide polylactique. L'invention s'applique en particulier, aux cartes SIM.

## Description

### DOMAINE DE L'INVENTION

L'invention a trait au domaine des cartes à puce. Elle concerne les cartes à puce comportant, d'une part, un corps de carte moulé, réalisé par moulage par injection, et, d'autre part, une puce à circuit intégré. Elle concerne en outre un procédé de fabrication de telles cartes à puce. Plus particulièrement, les cartes visées dans la présente invention sont des modules d'identification abonnés, dites cartes SIM. Les cartes SIM sont destinées à être incorporées au sein de téléphones portables. Elles identifient un abonné à un fournisseur de services dans un réseau de télécommunication de type cellulaire.

### ART ANTERIEUR

Les cartes à puce sont des objets électroniques portatifs normalisés, qui comprennent un corps de carte et une puce à circuit intégré.

Le corps de carte se présente sensiblement sous la forme d'un parallélépipède rectangle d'épaisseur réduite. Dans le cas où la carte est une carte SIM, alors le corps de carte présente une prédécoupe délimitant une carte intérieure de dimensions plus réduites, ou mini-carte. Cette mini-carte est reliée au corps de carte par des attaches. Ces attaches peuvent être cassées de manière que la mini-carte puisse être séparée du reste du corps de carte puis incorporée au sein de téléphones portables acceptant le format mini-carte. De même que pour les cartes au format classique, n'intégrant pas de mini-carte, les caractéristiques dimensionnelles des mini-cartes sont normalisées.

La puce à circuit intégrée est généralement incorporée dans un module électronique ou micromodule. Ce module présente des contacts affleurant à la surface du corps de carte. La position des contacts est elle-même normalisée.

Les cartes à puce sont généralement fabriquées par lamination ou par moulage par injection.

Pour la fabrication de carte par lamination, on assemble à chaud des feuilles plastiques extrudées, de manière à obtenir un feuillet constituant le corps de carte. Dans un exemple, ce feuillet comprend six feuilles dont deux feuilles externes de recouvrement dites overlay. Le module est par exemple incorporé au corps de carte dans une étape ultérieure, après qu'une cavité ait été réalisée dans ledit corps, notamment par fraisage. Dans le cas où le corps de carte présente une prédécoupe définissant une mini-carte, cette prédécoupe est réalisée par façonnage ou au moyen d'un outil de prédécoupe tel qu'un faisceau laser, un jet haute pression ou un outil mécanique type « poinçonnage ».

En pratique, la mise au point des procédés de fabrication de cartes à puce par lamination est relativement simple. Toutefois, la mise en oeuvre de la fabrication des cartes à puce par lamination est lourde, car nécessitant de multiples étapes, dont les étapes précitées de réalisation de la cavité pour le report du module.

A l'opposé, la mise au point des procédés de fabrication de cartes à puce par moulage par injection est délicate. En effet, la hauteur de la cavité interne des moules - sensiblement au format de la carte - est particulièrement réduite par rapport à ses autres dimensions. La matière plastique injectée doit se répartir correctement dans l'entièreté de la cavité du moule, en particulier, dans les interstices formant les attaches de fixation d'une mini-carte, si la carte que l'on souhaite fabriquer comporte une mini-carte, ou alors, à la verticale d'un noyau du moule destiné à former une cavité pour le report ultérieur du module, soit dans une épaisseur très limitée de la cavité du moule, bien inférieure aux 0,76 mm correspondant à l'épaisseur minimum normalisée d'un corps de carte. Si la matière ne se répand pas correctement au sein de la cavité du moule, alors les cartes ainsi fabriquées par moulage sont incomplètes. En outre, la matière doit pouvoir être injectée à des températures élevées, notamment supérieures à 150 °C et sous pression, par exemple sous une pression supérieure à 1000 bars, sans que la carte obtenue présente des défauts d'aspects. De nombreuses matières connues s'avèrent ne pas être injectables dans ces conditions et satisfaisantes au point de vue de l'aspect des corps de carte obtenus. Par exemple, l'utilisation de certaines matières, voire de certaines matières dans certaines conditions d'injection, on obtient des cartes qui présentent des défauts d'aspect du type : retassures et/ou des nervures. Dans d'autres cas, on observe des infiltrations entres les différentes parties du moule. C'est la raison pour laquelle seule une minorité de Sociétés disposent aujourd'hui de l'expertise suffisante pour réaliser des cartes par moulage par injection. Enfin, dans le cas des cartes SIM en particulier, le corps de carte réalisé par moulage par injection doit résister à des températures élevées, en pratique 85 °C. Elles doivent en outre présenter une résistance adéquate à l'humidité. En pratique, les cartes SIM ne doivent pas présenter de détérioration même lorsque le degré d'humidité à l'intérieur du téléphone est de 93 %.

Compte tenu des contraintes ci-dessus, les cartes SIM de l'art antérieur sont aujourd'hui essentiellement fabriquées à partir d'ABS (acrylonitrile butadiène styrène).

L'ABS présente cependant un inconvénient majeur. Il ne s'agit pas d'un produit que nous qualifierons, aux termes de la présente description de l'invention, de vert, c'est-à-dire d'un produit qui présente une certaine biodégradabilité. De ce fait, les cartes réalisées en ABS ne se dégradent pas après usage ou, à tout le moins, pas substantiellement. Dans le cas des cartes SIM dont une mini-carte est détachable, une fois la mini-carte séparée du reste du corps de carte, ce reste est jeté et ne se dégrade pas.

Certes des cartes dites vertes, fabriquées à partir de matériaux plastiques, qui s'avèrent biodégradables, ont été réalisées par lamination, et on se référera notamment au document EP 1 862 507 A1. Néanmoins, ces cartes sont des cartes laminées et, ainsi que cela a été expliqué plus haut, les matériaux utilisés pour la fabrication de cartes laminées ne sont pas utilisables pour la fabrication de cartes moulées par injection, et on ne connait pas aujourd'hui de carte verte réalisée par moulage par injection et, en particulier, de carte SIM verte, qui présente une résistance adéquate à la chaleur et à l'humidité, pour une utilisation dans des téléphone mobiles selon les spécifications requises par les fournisseurs de services en matière de téléphonie mobile.

### RESUME DE L'INVENTION

Compte tenu de ce qui précède, un problème que se propose de résoudre l'invention est d'obtenir des cartes à puce vertes par moulage par injection, en particulier, des cartes SIM résistantes à une température élevée, notamment de 85 °C et à une forte humidité, notamment de 93 %.

La solution proposée de l'invention à ce problème a pour premier objet une carte à puce comportant, d'une part, un corps de carte thermoplastique moulé, réalisé par moulage par injection et, d'autre part, une puce à circuit intégré, caractérisée en ce que ledit corps de carte comprend de l'acide polylactique.

Elle a pour second objet un procédé de fabrication d'une carte à puce comportant, d'une part, un corps de carte et, d'autre part, une puce à circuit intégré, caractérisé en ce qu'il comporte les étapes suivantes selon lesquelles :
on fournit un moule définissant une empreinte du corps de carte ;
on fournit une matière comprenant de l'acide polylactique ;
on injecte cette matière dans le moule ; et
on démoule le corps de carte ainsi injecté.

De manière avantageuse, - le corps de carte comprend plus de 40 % en poids, du poids total dudit corps, d'acide polylactique ; - le corps de carte comprend en outre copolymère ; - le corps de carte comprend au plus 60 % en poids de copolymère ; - ce copolymère est un copolyester ; - le corps de carte comprend en outre un colorant; - le colorant comprend du dioxyde de titane ; - la fluidité de la matière injectée pour la réalisation du corps de carte est comprise entre 8 et 20 g/10 min MFI ; - la carte est un module d'identification abonné et en ce que le corps de carte présente des prédécoupes délimitant une mini-carte détachable ; et - la température d'injection est supérieure à 150 °C et en ce que la pression d'injection est supérieure à 1000 bars.

L'invention sera mieux comprise à la lecture de la description qui suit d'exemples de réalisation non limitatifs.

### DESCRIPTION DETAILLEE DE L'INVENTION

Les cartes à puce selon l'invention comportent un corps de carte et une puce à circuit intégré.

Le corps de carte se présente sensiblement sous la forme d'un parallélépipède rectangle d'épaisseur réduite. Les normes ISO 7810, ISO 7816, ainsi que les normes GSM établies par l'ETSI, notamment la norme ETSI TS 102 221, définissent les dimensions du corps de carte. Ces dimensions sont les suivantes : 85,60 mm de longueur, 53,98 mm de largeur, pour une épaisseur de 0,76 mm. Dans le cas où la carte est une carte SIM, alors le corps de carte, aux dimensions précitées, présente une prédécoupe délimitant une carte intérieure de dimensions plus réduites, ou mini-carte. Cette mini-carte est reliée au corps de carte par des attaches. Ces attaches peuvent être cassées de manière que la mini-carte puisse être séparée du reste du corps de carte puis incorporée au sein de téléphones portables acceptant le format mini-carte. De même que pour les cartes au format classique, n'intégrant pas de mini-carte, les caractéristiques dimensionnelles des mini-cartes sont définies dans les normes précitées.

Le corps de carte selon l'invention est moulé, réalisé par moulage par injection. Il se distingue donc des corps de cartes laminées, réalisés par lamination. En effet, les corps de carte réalisés par moulage par injection forment des pièces unitaires alors que les corps de carte réalisés par lamination constituent un feuillet formé de feuilles superposées, qui peuvent être distinguées les unes des autres dans le corps de carte fini. En outre, les corps de carte réalisés par moulage par injection présentent généralement des traces des points d'injection, notamment sur les champs du corps de carte.

Selon l'invention, le corps de carte, réalisé par moulage par injection, comprend de l'acide polylactique ou PLA. Le PLA est un thermoplastique biodégradable connu dérivé par exemple de la canne à sucre ou de l'amidon de maïs. Le PLA est biodégradable. Dans un exemple de réalisation, le PLA est un mélange comprenant 90 % en poids, du poids total dudit mélange, de PLA, ce mélange étant distribué par la Société CEREPLAST^{TM} sous la référence Compostable 1001 et présente un point Vicat de 93 °C et une température de transition vitreuse de - 28 °C.

Préférentiellement, le corps de carte est thermoplastique et comprend plus de 40 % en poids, du poids total dudit corps, de PLA. Plus préférentiellement, le corps de carte comprend entre 50 et 80 % en poids de PLA.

Préférentiellement, le corps de carte comprend en outre au plus 60 % en poids, du poids total dudit corps, d'un copolymère, ce copolymère étant préférentiellement un copolyester. Plus préférentiellement, le corps de carte comprend entre 15 et 50 % en poids d'un tel copolymère. Par exemple, le copolymère est un copolyester aliphatique distribué par la Société NATUREPLAST^{TM} sous la référence PBI03 et dont le point Vicat est de 44 °C et la température de transition vitreuse Tg est de 55 °C.

De manière avantageuse, le corps de carte comprend en outre un colorant, par exemple une charge minérale destinée à conférer une couleur blanche au corps de carte obtenu par moulage par injection. La charge minérale est par exemple une charge de dioxyde de titane, Ti02, présente à raison de 60% en poids dans le colorant.

La fluidité de la matière injectée pour la réalisation du corps de carte est comprise entre 8 et 20 g/10 min MFI (Melt Flow Index - valeurs normalisées NFT 51-016 et 620, ISO 1133). Au-dessus de 20 g/10 min MFI, des infiltrations du mélange comprenant du PLA apparaissent. Au-dessous de 8 g/10 min MFI, l'injection est difficile voire impossible, et certaines cartes injectées sont incomplètes ou présentent des défauts d'aspect. On notera que cette fluidité, donnée en MFI, est substantiellement indépendante de la température ou de la pression d'injection de la matière.

Pour la fabrication de cartes selon l'invention, un mélange est tout d'abord préparé. Ce mélange comprend du PLA, avantageusement un copolymère, en pratique, un copolyester, et un colorant, dans les quantités précitées.

Ce mélange est chauffé, porté à une température supérieure à 150 °C, par exemple de l'ordre de 200 °C.

La fluidité du mélange comportant du PLA est spécifiquement déterminée pour être comprise entre 8 et 20 g/10 min MFI. Ainsi, cette matière comportant du PLA se répand correctement dans le moule, éventuellement sous le noyau permettant de définir la cavité du module, sans présenter de mini-vagues à l'injection contre les parois du moule ou autres perturbations qui pourraient conduire à des défauts d'aspect de la carte.

Le mélange à la fluidité précitée est ensuite injecté sous une pression généralement supérieure à 1000 bars dans le moule. De tels moules sont notamment divulgués dans les documents W003/021526A1 ou EP1857969A2 dont le contenu est incorporé à la présente description, par citation de référence.

La matière injectée dans le moule est refroidie et le corps de carte est extrait, en pratique éjecté du moule.

Un module comprenant une puce à circuit intégré est alors reporté dans la cavité du corps de carte. Il est par exemple collé dans cette cavité.

Contrairement à l'ABS, les mélanges utilisés selon l'invention présentent un retrait faible Les cartes obtenues, plus particulièrement les corps de ces cartes, qui comportent du PLA, sont verts, voire biodégradables. Ils sont composés de matières en partie issues de ressources renouvelables à hauteur d'au moins 36% basé sur les ratios de PLA/copolyester précités. Ils sont aisément recyclables et compostables et peuvent être incinérés sans émission de vapeurs toxiques. Les corps de cartes selon l'invention permettent donc d'assurer une fin de vie au produit qui n'occasionnera pas de pollution des sols, ni de l'atmosphère. En particulier, une fois la mini-carte détachée de son support, le restant du corps de carte peut être récupéré pour être revalorisé.

### Exemple 1 : Cartes SIM biodégradables

On a préparé un mélange comprenant:
- 74% en poids d'une matière distribuée par la Société CERAPLAST^{TM} sous la référence INJ1001EZC, et comprenant 90 % en poids de PLA préparé à partir d'amidon de maïs ;
- 24 % en poids d'un copolyester 100 % biodégradable distribué par la Société NATUREPLAST^{TM} sous la référence PIB03 ; et
- 2 % en poids de colorant blanc POLYONE^{TM} à base de Ti02.

Ce mélange a été porté à une température de 210 °C puis injecté sous une pression de 1220 bars dans une cavité d'un moule destiné à l'obtention de corps de carte moulés présentant une minicarte détachable.

La fluidité du mélange était d'environ 12 g/10 min MFI.

Un module incorporant une puce à circuit intégré à été reporté dans le corps de carte.

La carte obtenue est une carte verte - au sens de la présente description de l'invention -, et biodégradable.

Des tests de tenue à la température et à la chaleur ont été effectués. Ils ont montré que les cartes obtenues présentent une bonne tenue à une température de 85 °C et dans une humidité de 93 % pendant un temps donné. En outre, lesdites cartes présentent des caractéristiques en adéquation avec l'application GSM.

## Revendications

1. Carte à puce comportant, d'une part, un corps de carte moulé, réalisé par moulage par injection, et, d'autre part, une puce à circuit intégré, **caractérisée en ce que** ledit corps de carte comprend de l'acide polylactique.

2. Carte à puce selon la revendication 1, **caractérisée en ce que** le corps de carte comprend plus de 40 % en poids, du poids total dudit corps, d'acide polylactique.

3. Carte à puce selon l'une des revendications 1 ou 2, **caractérisée en ce que** le corps de carte comprend en outre copolymère.

4. Carte à puce selon la revendication 3, **caractérisée en ce que** le corps de carte comprend au plus 60 % en poids de copolymère.

5. Carte à puce selon l'une des revendications 3 ou 4, **caractérisée en ce que** ce copolymère est un copolyester.

6. Carte à puce selon l'une des revendications précédentes, **caractérisée en ce que** le corps de carte comprend en outre un colorant.

7. Carte à puce selon la revendication 6, **caractérisée en ce que** le colorant comprend du dioxyde de titane.

8. Carte à puce selon l'une des revendications précédentes, **caractérisée en ce que** la fluidité de la matière injectée pour la réalisation du corps de carte est comprise entre 8 et 20 g/10 min MFI.

9. Carte à puce selon l'une des revendications précédentes, **caractérisée en ce qu'**elle est un module d'identification abonné et **en ce que** le corps de carte présente des prédécoupes délimitant une mini-carte détachable.

10. Carte à puce selon l'une des revendications précédentes, **caractérisée en ce qu'**elle est biodégradable.

11. Procédé de fabrication d'une carte à puce comportant, d'une part, un corps de carte et, d'autre part, une puce à circuit intégré, **caractérisé en ce qu'**il comporte les étapes suivantes selon lesquelles:
on fournit un moule définissant l'empreinte du corps de carte ;
on fournit une matière comprenant de l'acide polylactique ;
on injecte cette matière dans le moule ; et
on démoule le corps de carte ainsi injecté.

12. Procédé selon la revendication 11, **caractérisé en ce que** la matière injectée comprend au moins 40 % en poids, du poids total de ladite matière, d'acide polylactique et au plus 60 % en poids, du poids total de ladite matière, d'un copolymère.

13. Procédé selon l'une des revendications 11 ou 12, **caractérisée en ce que** la fluidité de la matière injectée pour la réalisation du corps de carte est comprise entre 8 et 20 g/10 min MFI.

14. Procédé selon l'une des revendications 11 à 13, **caractérisé en ce que** la carte à puce est un module d'identification abonné et **en ce que** le corps de carte présente des prédécoupes délimitant une mini-carte détachable.

15. Procédé selon l'une des revendications précédentes, **caractérisé en ce que** la température d'injection est supérieure à 150 °C et **en ce que** la pression d'injection est supérieure à 1000 bars.
